# EUROPÄISCHE PATENTANMELDUNG

(11) **EP 2 249 223 A2**
(43) Veröffentlichungstag der Anmeldung: **10.11.2010**
(21) Anmeldenummer: 10004741.4
(22) Anmeldetag: 05.05.2010
(51) Int. Cl.: G05B 23/02

(54) **Stellplatzüberwachungssystem**

(30) Priorität: 05.05.2009 DE 102009019728
(71) Anmelder: BSS Bohnenberg GmbH, 42697 Solingen (DE); TELEDATA-UPDATE Gesellschaft für Telefon-Tarifdaten-Management mbH, 26409 Wittmund-Biersum (DE)
(72) Erfinder: Reemts, Lars, 26817 Rhauderfehn (DE); Busboom, Gerd, 26817 Rhauderfehn (DE); Bohnenberg, Harals, 40597 Düsseldorf (DE); Blache, Dr. Volker, 26835 Hesel (DE)
(74) Vertreter: Jungen, Rolf

(57) **Zusammenfassung**

Ein Stellplatzüberwachungssystem weist eine Steuer- und Auswertevorrichtung (16), die mit mindestens einer Busleitung (15) verbunden ist, mindestens ein Management-Modul (5), das an die Busleitung (15) angeschlossen ist, und mindestens eine Sequenz hintereinandergeschalteter Sensor-Module auf, die an das mindestens eine Management-Modul (5) angeschlossen ist, wobei mit jedem Sensor-Modul der Belegungszustand mindestens eines zugeordneten Stellplatzes (6, 7, 8, 9) detektierbar und an das jeweilige Management-Modul (5) weiterleitbar ist und mit jedem Management-Modul (5) die mindestens eine daran angeschlossene Sequenz von Sensor-Modulen mit Spannung versorgbar und die Belegungszustände der Sensor-Module abfragbar und speicherbar sind sowie über die Busleitung (15) an die Steuer- und Auswertevorrichtung (16) übertragbar sind.

## Beschreibung

Die Erfindung betrifft ein Stellplatzüberwachungssystem, insbesondere für die Belegung von Durchlaufkanälen einer Kommissionieranlage mit Warenbehältern.

Es sind derartige Stellplatzüberwachungssysteme bekannt, die Sensor-Module, mit denen der Belegungszustand der Stellplätze detektierbar ist, und eine zentrale Steuer- und Auswertevorrichtung aufweisen, an die die Belegungszustände über ein Bussystem übertragbar und durch die Einheit speicherbar sind.

Als Sensor-Module für die Stellplatzüberwachung wurden bisher optische oder mittels Ultraschall arbeitende Distanzmessgeräte und Magnetflussdichte-Sensoren, die die Flussdichteänderung, insbesondere der vertikalen Komponente des Erdmagnetfeldes durch die Belegung eines Stellplatzes detektieren. Diese Sensor-Module sind über das Bussystem miteinander verknüpft, wobei die Steuer- und Auswertevorrichtung die Adressierung sämtlicher Sensoren, eine Referenzwertspeicherung bzgl. der Messdaten und eine Schwellwertdetektion bzgl. der Sensorsignale zentral übernimmt.

Der vorliegenden Erfindung liegt die Aufgabe zugrunde, ein Stellplatzüberwachungssystem derart weiterzubilden, dass, insbesondere bei einer Vielzahl von zu überwachenden Stellplätzen mit vorgegebenen Gruppierungen, eine konfigurierbare und Strom sparende Abfrage der Belegungszustände der einzelnen Stellplätze ermöglicht wird.

Die Aufgabe wird erfindungsgemäß durch die Merkmalskombination des Anspruchs 1 gelöst.

Mit Hilfe der Management-Module können die Belegungszustände der Stellplätze gruppenweise für die an das jeweilige Management-Modul angeschlossenen Sequenzen, Sensorstränge oder "Äste" hintereinander geschalteter Sensor-Module abgefragt werden. Dies geschieht durch sogenanntes "Pollen" der einzelnen Äste. Dazu versorgt das Management-Modul die Sensor-Module des jeweiligen Astes mit Spannung und nimmt die logischen Belegungszustände (belegt/nicht belegt) der Sensor-Module auf einer Datenleitung entgegen. Zusätzlich zu den Belegungsdaten kann auch der jeweilige Sensortyp als Pulslängen kodiert an das Management-Modul übertragen werden.

Die Äste können sequentiell abgefragt werden. Vorteilhaft kann das Stellplatzüberwachungssystem so ausgelegt werden, dass die Management-Module zeitlich synchronisiert werden. Es kann ein Zeitschlitzverfahren vorgesehen sein, gemäß dem die einzelnen Sensoren eines Astes oder Sensorstranges in einem bestimmten Zeitintervall aktiviert werden können und eine Abfrage erfolgen kann. Somit können die Belegungszustände der Stellplätze und/oder Betriebszustände der Sensormodule von der Steuer- und Auswertevorrichtung in regelmäßigen Abständen abgefragt werden. Die Abfrage kann zyklisch in ununterbrochenen Folge durchgeführt werden. In der Abfrage können die Belegungszustände und/oder Betriebszustände an das jeweils zugeordnete Management-Modul übermittelt werden. Die Belegungszustände und/oder Betriebszustände können wiederum durch die Steuer- und Auswertevorrichtung abgefragt werden können. Die Belegungszustände und/oder Betriebszustände können auch automatisch von den Management-Modulen zu der Steuer- und Auswertevorrichtung geschickt werden. Vorzugsweise können die Management-Module die Steuer- und Auswertevorrichtung eigenaktiv über erfasste Änderungen des Belegungszustandes eines Stellplatzes und/oder des Betriebszustandes einer der Sensoren der zugeordneten Sensor-Module informieren. Bei den regelmäßigen Abfragen können Management-Module zur Verringerung der übermittelten Datenmenge die Steuer- und Auswertevorrichtung lediglich über erfassten Änderungen der Belegungszustände der Stellplätze und/oder der Betriebszustände der Sensoren der zugeordneten Sensor-Module informieren.

Über das Zeitschlitzverfahren kann eine effiziente Verwaltung der Spannungsversorgung erfolgen. Dies bietet den Vorteil, dass die Sensor-Module eines Sensorstranges lediglich während des ihnen zugeordneten Zeitintervalls über das zugehörige Management-Modul mit Spannung versorgt werden müssen. Dies wiederum ermöglicht eine entsprechend verringerte Stromaufnahme des Systems, so dass eine bei einer dauerhaften Versorgung übliche Stromversorgung über zusätzliche Versorgungsleitungen überflüssig ist. Durch das Zeitschlitzverfahren kann ferner die tatsächliche Betriebszeit pro Messung für ein Sensor-Modul entsprechend gesenkt werden, so dass eine Lebenserwartung der Sensor-Module entsprechend verlängert werden kann. Dies wiederum senkt die Wartungskosten des Stellplatzüberwachungssystems.

Ferner kann mittels des Zeitschlitzverfahrens vorteilhaft eine gegenseitige Beeinflussung der Sensor-Module vermieden werden, indem beispielsweise die Sensor-Module, die sensorisch einander gegenüberliegen und sich quasi "einander anschauen", nicht synchron, sondern zeitversetzt aktiviert werden. Sind dennoch beispielsweise zwei Sensoren desselben Zeitschlitzes einander gegenüberliegend angeordnet, so kann zur Lösung des Konfliktes beispielsweise einem der beiden Sensoren eine andere Adresse in dem zugehörigen Management-Modul zugeordnet werden. Alternativ kann konstruktiv vorgegangen werden, indem die Sensoren der Sensor-Module voneinander abgeschirmt werden. Zur Abschirmung können bei Verwendung optischer Sensoren zwischen denselben beispielsweise vorzugsweise mattschwarz lackierte Abschirmbleche vorgesehen sein, bei magnetischen Sensoren eine entsprechende magnetische Abschirmung.

Die angeschlossenen Äste oder Sensorstränge eines Management-Moduls können vorzugsweise zyklisch nacheinander aktiviert werden. Die Aktivierung erfolgt dergestalt, dass zu jedem Zeitpunkt nur höchstens ein Sensorstrang jedes Management-Moduls mit Spannung versorgt wird. Nach dem Einschalten der Spannung eines Sensorstranges kann eine gewisse Zeit (in der Regel etwa 150ms) gewartet werden, bevor die tatsächliche Messung der Sensorsignale erfolgt. Diese Zeit brauchen übliche Sensoren, um ein stabiles Ausgangssignal zu liefern.

Die eigentliche Messung kann etwa 40ms andauern. Um eine ausreichende Toleranz zur Synchronisierung mehrere Management-Module bieten zu können, kann vorgesehen sein, dass nach jeder Messung für 130ms kein Sensorstrang aktiv ist. Die Abfrage eines Sensorstranges kann damit ca. 320ms andauern. Sind, was bevorzugt ist, vier Äste oder Sensorstränge pro Management-Modul vorgesehen, so kann ein gesamter Abfragezyklus ca. 1280ms und damit etwas mehr als 1s dauern. Es versteht sich, dass die genannten Zahlenwerte beispielhaft sind und Weiterentwicklungen entsprechend veränderte Abfragezykluszeiten ermöglichen können.

Die Anzahl der möglichen Zeitschlitze hängt von der Anzahl der Äste oder Sensorstränge pro Management-Modul ab. Jedes Management-Modul kann den Zeitschlitz für eine Anfrage anhand der Moduladresse innerhalb des Stranges ändern. Sind gemäß dem obigen Beispiel vier Äste oder Sensorstränge pro Management-Modul vorgesehen, so können bei zeitlicher Synchronisierung bevorzugt aller Management-Module des Stellplatzüberwachungssystems folgende Sensorstränge gleichzeitig aktiv sein:
- Sensorstrang 1 des Management-Moduls mit der Adresse 1
- Sensorstrang 2 des Management-Moduls mit der Adresse 2
- Sensorstrang 3 des Management-Moduls mit der Adresse 3
- Sensorstrang 4 des Management-Moduls mit der Adresse 4
- Sensorstrang 1 des Management-Moduls mit der Adresse 5
- Sensorstrang 2 des Management-Moduls mit der Adresse 6
- usw.

Das jeweilige Management-Modul kann die Belegungsdaten und gegebenenfalls Typdaten der daran angeschlossenen Sensor-Module im RAM eines Controllers speichern. Dabei können die neu empfangenen Daten mit den bisher gespeicherten Daten verglichen werden. Im Falle von Änderungen werden die Daten nach einem kompletten Abfragezyklus gesammelt über die Busleitung an die Steuer- und Auswertevorrichtung übertragen.

Durch optimale Abfragestrategien kann der Stromverbrauch der Sensor-Module, insbesondere durch möglichst lange Abfrageintervalle, reduziert werden. Wird ein relativ langes Abfrageintervall gewählt, ist es vorteilhaft, zusätzlich die Möglichkeit einer aktuellen Datenabfrage durch die Steuer- und Auswertevorrichtung vorzusehen, die bis zu den Sensor-Modulen durchreicht und dort eine Abfrage auslöst.

Die Management-Module können über die Busleitungen vorzugsweise mit einer nicht stabilisierten Spannung von nominal 24V versorgt werden. Die tatsächliche Spannung am Management-Modul kann aufgrund von je nach Lastsituation unterschiedlichen Spannungsabfällen auf den Versorgungsleitungen zwischen 15V und 32V betragen. Diese Spannung kann im Management-Modul mittels eines Schaltreglers auf 5V stabilisiert werden. Durch dieses Vorgehen kann das System flexibel auf verschiedene Lastsituationen reagieren. Darüber hinaus kann dadurch die Verlustleistung in der Steuer- und Auswertevorrichtung gering gehalten werden.

Die Versorgungsspannung kann in den Busleitungen über dedizierte Leitungen geführt werden. An diese sind die Management-Module bevorzugt parallel angeschlossen. Hierbei entsteht aus Spannungsquelle in der Steuer- und Auswertevorrichtung, den Leitungen im Feldbus und den Management-Modulen ein elektrischen Stromkreis.

Die Steuer- und Auswertevorrichtung kann beim Systemstart sowie bei der Erkennung eines neu angeschlossenen Management-Moduls die Belegungsdaten und gegebenenfalls Typdaten bei jedem Management-Modul spontan abfragen. Von diesem Zeitpunkt an informieren die Management-Module die Steuer- und Auswerteeinheit aktiv über alle Änderungen der angeschlossenen Sensor-Module. Der Steuer- und Auswertevorrichtung ist daherzu jedem Zeitpunkt mit einer Verzögerung in der Größenordnung des Abfrageintervalls der Status aller angeschlossenen Sensor-Module bekannt.

Die Steuer- und Auswertevorrichtung kann eine Bus-Steuereinheit und eine Abfrage- und Auswerteeinheit aufweisen, mit der die Belegungsdaten der Sensoren abfragbar und erfassbar sind und zur weiteren Verarbeitung, z.B. Bedienung der Stellplätze durch ein Bediengerät verwendbar sind.

In einer bevorzugten Weiterbildung der Erfindung weisen die Sensor-Module optische Sensoren auf.

Das analoge Ausgangssignal eines optischen Sensors kann einer Auswerteelektronik zugeführt werden, in der es in ein Digitalsignal umgewandelt wird. Das Digitalsignal kann einer Impulscodierung zugeführt werden, in der es auf eine Nennspannung verstärkt und als Rechtecksignal weitergeleitet wird. Die Auswertelektronik und die Impulscodierung können jeweils in einem Sensor-Modul vorgesehen sein, so dass das Sensor-Modul das Rechtecksignal an das zugeordnete Management-Modul überträgt. Das Management-Modul erkennt dann an der Pulsform den angeschlossenen Sensortyp und den logischen Zustand belegt/nicht belegt. Dadurch ist es dem Management-Modul zusätzlich möglich, ein fehlerhaftes Sensor-Modul oder eine fehlerhafte Verbindungsleitung zu erkennen. Es kann eine gemeinsame Masse für die Spannungsversorgung und das Signal verwendet werden.

In einer besonders vorteilhaften Ausführung sind die Sensor-Module als Doppel-Lichtschranken-Module ausgebildet.

Die beiden Lichtschranken-Module können in einem gemeinsamen Gehäuse derart angeordnet sein, dass das von Ihnen emittierte Licht zur Detektion der Belegung zweier entsprechend angeordneter Stellplätze dienen kann. Insbesondere kann das Gehäuse mit den beiden Lichtschranken-Modulen zwischen zwei zu überwachenden Stellplätzen angeordnet sein, so dass die Richtungen des von ihnen emittierten Lichtes voneinander weg weisen.

Für die Lichtschranken ist jeweils eine Öffnung im Gehäuse vorgesehen. Die Öffnungen weisen bevorzugt Schutzscheiben auf, durch die Lichtschranken gegen Verschmutzung geschützt sind.

Weiterhin können an den Öffnungen Blenden vorgesehen sein, durch die die Lichtschranken gegen Fremdlicht geschützt sind.

Jeder an ein Management-Modul angeschlossene Ast umfasst vorzugsweise bis zu vier hintereinander geschaltete Sensor-Module.

Weiterhin sind an ein Management-Modul vorzugsweise bis zu vier Äste von Sensor-Modulen angeschlossen.

An eine Busleitung sind vorzugsweise bis zu 64 Management-Module angeschlossen.

Mit der Steuer- und Auswertevorrichtung können vorzugsweise bis zu 16 Busleitungen, an die jeweils Management-Module mit Ästen von Sensor-Modulen angeschlossen sind, verbunden sein. Somit können bis zu 1024 ansteuerbare Management-Module an die Steuer- und Auswertevorrichtung angeschlossen bzw. 4096 Sensor-Module über die Management-Module erreichbar sein.Das vorstehend beschriebene Stellplatzüberwachungssystem eignet sich bevorzugt zur Überwachung von Stellplätzen für Warenbehälter in Durchlaufkanälen einer Kommissionieranlage, wobei mehrere Durchlaufkanäle horizontal nebeneinander und/oder vertikal übereinander angeordnet sind, jeder Durchlaufkanal in Längsabschnitten desselben mehrere Stellplätze für die Warenbehälter aufweist und jeder Durchlaufkanal einem Ast von Sensor-Modulen zugeordnet ist, wobei die Sensor-Module seitlich neben einigen der Stellplätze angeordnet sind.

Eine solche erfindungsgemäße Verwendung eines Stellplatzüberwachungssystems soll zusätzlich eine Sicherheit zur Ansteuerung des die Durchlaufkanäle mit Warenbehältern beschickenden Regalbedienungsgerätes gewährleisten.

Insbesondere soll damit folgender Fehlerfall vermieden werden:
Ein leerer Warenbehälter wurde aus irgendeinem Grunde nicht aus dem betreffenden Durchlaufkanal genommen. Nach Kommissionierinformation steht jedoch ein Nachfüllen des Durchlaufkanals durch das Regalbediengerät an. Dieses kann aber, da der leere Behälter nicht entfernt wurde, kein Nachfüllen vornehmen. Dies führt zu einer nichtoptimalen Auslastung des Bediengerätes und unter Umständen zu Verzögerungen im Kommissionierbereich.

In einer bevorzugten Ausführung sind jeweils zwischen zwei nebeneinander liegenden Stellplätzen zweier horizontal unmittelbar benachbarter Durchlaufkanäle Doppel-Lichtschranken-Module angeordnet, die einem bestimmten an einem Management-Modul angeschlossenen Ast von Sensor-Modulen zugeordnet sind.

Um ein einwandfreies Nachfüllen zweier horizontal unmittelbar benachbarter Durchlaufkanäle durch das Regalbediengerät zu gewährleisten, genügt es, die von der Entnahmeposition der Durchlaufkanäle aus gesehen letzten beiden Stellplätze jedes Durchlaufkanals zu überwachen. Dazu können zwischen den letzten beiden Stellplätzen der jeweils gegenüberliegenden Durchlaufkanäle Doppel-Lichtschranken-Module angeordnet sein. Die die beiden Doppel-Lichtschranken-Module bildenden insgesamt vier Sensor-Module sind zu einem Ast zusammengeschaltet, der an ein Management-Modul angeschlossen ist.

An das gleiche Management-Modul können bis zu drei weitere Äste aus hintereinander geschalteten Doppel-Lichtschranken-Modulen angeschlossen sein, die zur Überwachung übereinanderliegender Ebenen von Durchlaufkanälen dienen können. Durch eine solche Topologie wird der Verkabelungsaufwand im Durchlaufregal minimiert, da durch die Verkabelung jeweils zwei Lichtschranken-Module verbunden sind.

Die Doppel-Lichtschranken-Module können in ein Gehäuse integriert werden, das relativ kompakt gehalten werden kann und sich für die Installation in dem begrenzten Raum zwischen zwei horizontal und unmittelbar benachbarten Durchlaufkanälen eignet. Die Sensor-Modul-Gehäuse können geeignete Halterungen aufweisen, mit denen sie zwischen den sich gegenüberliegenden Führungsschienen der Durchlaufkanäle, z.B. an einer der Führungsschienen, befestigbar sind. Da die Warenbehälter über die Höhe der Führungsschienen hinausragen, können die Sensor-Modul-Gehäuse leicht so angebracht werden, dass die Öffnungen für die zu den beiden Durchlaufkanälen weisenden Lichtschranken im Gehäuse oberhalb der Führungsschienen angeordnet sind.

Derartige Sensor-Module können im Fehlerfall leicht ausgetauscht werden. Durch zusätzliche gleichartige Sensor-Module kann das Stellplatzüberwachungssystem in einfacher Weise erweitert werden.

Ein Ausführungsbeispiel der Erfindung wird im Folgenden anhand der Zeichnung näher beschrieben.

In der Zeichnung zeigen:
- Figur 1: eine schematische Teildarstellung eines Stellplatzüberwachungssystems,
- Figur 2: eine Codierung der Sensor-Module eines Astes durch Kabelverbindungen und
- Figur 3: ein Blockschaltbild eines Lichtschranken-Moduls.

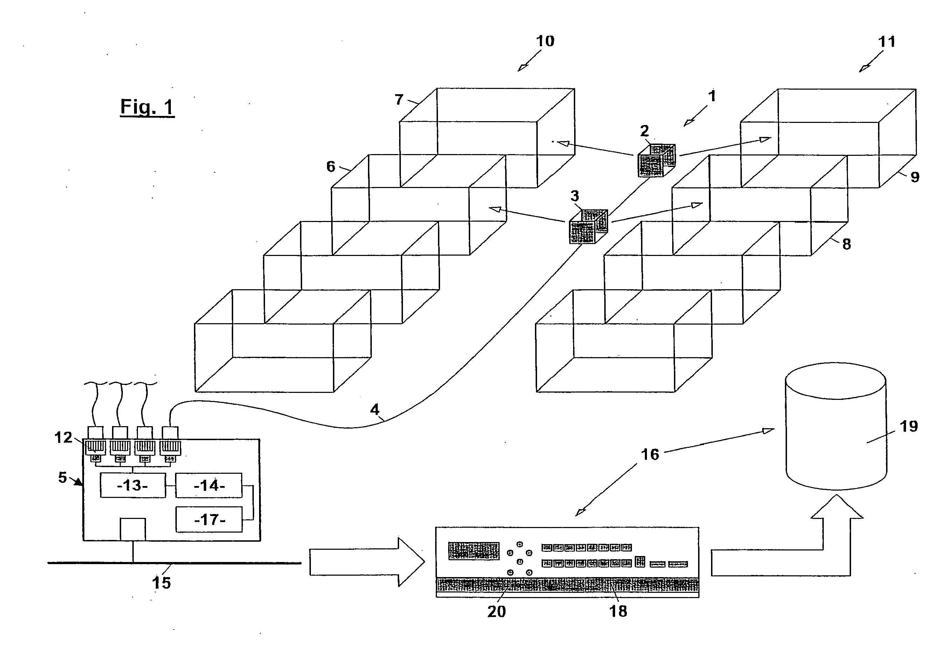

Die Teil-Darstellung eines Stellplatzüberwachungssystems gemäß Figur 1 zeigt einen Ast 1 aus zwei Doppel-Lichtschranken-Modulen 2, deren vier einzelne Lichtschranken-Module (Sensor-Module) in dem Ast 1 hintereinander geschaltet sind und über eine Datenleitung 4 an ein Management-Modul 5 angeschlossen sind.

Die Doppel-Lichtschranken-Module 2, 3 sind zwischen den letzten beiden Stellplätzen 6, 7 und 8,9 zweier nebeneinander liegender Durchlaufkanäle 10 und 11 einer Kommissionieranlage so angeordnet, dass mit Hilfe der in gegenüberliegende Richtung weisenden Einzel-Lichtschranken der Belegungszustand (belegt bzw. nicht belegt) der einzelnen Stellplätze 6, 7 und 8, 9 und detektierbar ist. Die den jeweiligen Belegungszuständen entsprechenden Belegungsdaten werden von den Sensor-Modulen über die Datenleitung 4 an das Management-Modul 5 übertragen.

Zusätzlich zu den Belegungsdaten kann eine Information über den jeweiligen Sensortyp als Pulslängen codiert über die Datenleitung 4 an das Management-Modul 5 übertragen werden.

Das Management-Modul 5 fragt in regelmäßigen Abständen die Sensor-Module nach dem Belegungszustand der Ihnen zugeordneten Stellplätze 6, 7 und 8, 9 und dem Sensortyp ab. Dazu versorgt es die Sensor-Module mit Spannung. Die von den Sensor-Modulen übertragenen Belegungsdaten und Sensortypdaten werden im Management-Modul 5 gespeichert.

Wie aus Figur 1 weiterhin hervorgeht, sind an das Management-Modul 5 drei weitere, im Einzelnen nicht dargestellte Äste mit jeweils zwei Doppel-Lichtschranken-Modulen angeschlossen. Diese Äste sind, wie der in Figur 1 gezeigte Ast 1, ebenfalls zwischen nebeneinander liegenden Durchlaufkanälen eines Durchlaufregals der Kommissionieranlage angeordnet. Die mit den Ästen überwachten paarweise nebeneinander liegenden Durchlaufkanäle können in einer gemeinsamen Regalebene und/oder in übereinanderliegenden Regelebenen angeordnet sein.

Das in Figur 1 dargestellte Management-Modul 5 weist vier Buchsen 12 zum Anschluss der vier Datenleitungen auf. Über eine Sensorankupplung 13 werden die Belegungs- und Typdaten der Sensor-Module im RAM eines Controllers 14 gesammelt. Dabei werden die neu empfangenen Daten mit den bisher gespeicherten Daten verglichen. Im Falle von Änderungen werden diese nach einem kompletten Abfragezyklus gesammelt über eine Busleitung 15 an eine Steuer- und Auswerteeinheit 16 übertragen. Dazu weist das Management-Modul 5 einen Busankoppler 17 an die Busleitung 15 auf.

Die Steuer- und Auswertevorrichtung 16 besteht aus einer Bus-Steuereinheit 18 und einer Abfrage- und Auswerteeinheit 19.

Mit der Busleitung 15 sind in dem betrachteten Ausführungsbeispiel neben dem in Figur 1 gezeigten Management-Modul 5 bis zu 64 weitere gleichartige Management-Module mit jeweils vier Datenleitungen mit daran angeschlossenen Doppel-Lichtschranken-Modulen verbunden, wobei die betreffenden Äste jeweils weitere Paare von nebeneinander liegenden Durchlaufkanälen im Durchlaufregal der Kommissionieranlage überwachen. Die Abfrage erfolgt zyklisch nach einem Zeitschlitzverfahren. Hierbei werden die Management-Module 5 synchronisiert. Nach dem Einschalten der Spannung eines Astes 1 wird eine gewisse Zeit (etwa 150ms) gewartet, bevor die tatsächliche Messung der Sensorsignale erfolgt. Die eigentliche Messung dauert etwa 40ms. Zur besseren Synchronisierung der Management-Module 5 ist nach jeder Messung kein Ast 1 für 130ms aktiv ist.

Das vorbeschriebene Stellplatzüberwachungssystem ist, wie durch den breiten Pfeil in Figur 1 nur angedeutet, um das 16-fache erweitert, indem 16 Busleitungen mit der vorstehend beschriebenen und in Figur 1 teilweise gezeigten Topologie an den Eingang 20 der Bus- Steuereinheit 18 angeschlossen sind. Mit dem gesamten System können daher bis zu 16.384 Stellplätze in den oben beschriebenen Gruppierungen überwacht werden.

Die durch die Busleitungen 15 übertragenen Belegungs- und Typdaten aller angeschlossenen Sensor-Module werden in der Bus-Steuereinheit 18 gespeichert. Die Bus-Steuereinheit 18 fragt beim Systemstart sowie bei der Erkennung eines neu angeschlossenen Management-Moduls die Belegungs- und Typdaten der an das Management-Modul 5 angeschlossenen Sensor-Module spontan ab. Von diesem Zeitpunkt an informiert das Management-Modul 5 die Bus-Steuereinheit 18 eigenaktiv über alle Änderungen der angeschlossenen Sensor-Module. Die Bus-Steuereinheit 18 ist daher zu jedem Zeitpunkt mit einer Verzögerung in der Größenordnung des Abfrageintervalls (Zeitintervall zwischen den Abfragen eines Sensor-Moduls) der Status aller angeschlossenen Sensor-Module bekannt. Zusätzlich teilt die Bus-Steuereinheit 18 jede Änderung als Ereignis über eine TCP/IP-Schnittstelle der Abfrage- und Auswerteeinheit 19 mit. Die Abfragen erfolgen zyklisch nach einem Zeitschlitzverfahren. Um eine gegenseitige Beeinflussung vermeiden zu können, werden einander sich sensorisch gegenüber liegende Sensormodule in dem Zeitschlitzverfahren in unterschiedlichen Zeitschlitzen abgefragt.

Die Abfrage- und Auswerteeinheit 19 kann jederzeit in der Bus-Steuereinheit 18 gespeicherten Belegungs- und Typdaten der Sensor-Module abfragen. Da aus Gründen der Reduzierung des Stromverbrauchs relativ lange Abfrageintervalle der einzelnen Sensor-Module vorteilhaft sind, ist eine spontane Statusabfrage durch die Abfrage- und Auswerteeinheit 19 vorgesehen, die bis zum jeweiligen Sensor-Modul durchreicht und dort eine spontane Abfrage auslöst.

Die Abfrage- und Steuerwerteeinheit 19 kann die erfassten Belegungsdaten der Sensoren zur Steuerung eines Regalbediengerätes verwenden, mit dem leere Warenbehälter aus den Durchlaufkanälen 10, 11, entfernt und durch mit Waren gefüllte Behälter ersetzt werden.

Mit der Abfrage- und Auswerteeinheit 19 können, wie der breite Pfeil in Fig. 1 andeutet, mehrere Bus-Steuereinheiten mit der oben beschriebenen und in Figur 1 dargestellten Topographie abgefragt werden.

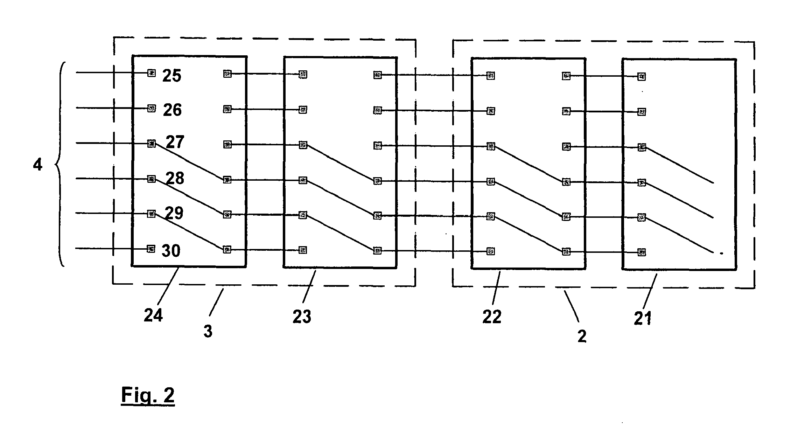

Figur 2 zeigt eine vorteilhafte Codierung der Sensor-Module 21, 22 und 23, 24 durch Kabelverbindungen in dem in Figur 1 gezeigten Ast 1. Die Sensor-Module 21 und 22 sowie 23 und 24 sind jeweils als die durch den Ast 1 in Figur 1 verbundenen Doppel-Lichtschranken-Module 2 bzw. 3 ausgebildet.

Der in Figur 2 links dargestellte Anschluss an das Management-Modul erfolgt über eine sechspolige Datenleitung 4 mit Steckverbindern. Die beiden oberen Pole 25 und 26 dienen der Spannungsversorgung durch das Management-Modul, während über die vier unteren Pole 27, 28, 29 und 30 der Datenaustausch erfolgt.

Jedes Sensor-Modul 21, 22, 23, 24 besitzt dem entsprechend eine sechspolige Eingangs- und Ausgangsbuchse. Während die Eingangsbuchse des in Figur 2 links dargestellten Sensor-Moduls 24 mit dem Management-Modul verbunden ist, sind die übrigen Sensor-Module 21, 22, 23 jeweils mit dem vorhergehenden Sensor-Modul verbunden.

Verkettet man mehr als vier Sensor-Module (bzw. zwei Doppel-Sensor-Module) in einem Ast, werden nur die ersten vier (vom Management-Modul aus betrachtet) erkannt, während alle weiteren unbeachtet bleiben, jedoch gegebenenfalls Strom verbrauchen, wie aus der in Figur 2 gezeigten Verdrahtung hervorgeht.

Um eine unnötige Strombelastung des Management-Moduls zu vermeiden, meldet das Management-Modul bei einer unzulässigen hohen Stromaufnahme in einem Ast einen Fehler und ermittelt dann in dem fehlerhaften Ast keine Belegungsdaten mehr. Dies ermöglicht einen Überlastungsschutz und eine Strombegrenzung der Stromversorgung für die Äste. Auf dieselbe Art und Weise verfährt das Management-Modul bei einem Kurzschluss in der Spannungsversorgung eines Sensor-Moduls.

Wie aus Figur 2 hervorgeht, wird die Position der Sensor-Module im Ast über die Buchsenbelegung der Module codiert. Damit wird eine umständliche Adressierung vermieden und die völlige Gleichartigkeit der Sensor-Module erreicht, was beim Aufbau und möglichen späteren Austausch wichtig ist.

Die in Figur 2 gezeigten Doppel-Lichtschranken-Module 2 und 3 sind in jeweils ein (in der Zeichnung nicht näher dargestelltes) Gehäuse integriert. Das Gehäuse ist als relativ kompaktes, schmales Kunststoffgehäuse ausgebildet. Die Sensor-Module (Reflektions-Lichtschranken) 21, 22 bzw. 23, 24 sind gegenüberliegend angeordnet. Ihr Detektionsbereich (von der Gehäusemitte aus gemessen) beträgt 2,7 cm - 13,5 cm, bevorzugt 5 cm - 8,5 cm. Er ist für Durchlaufkanäle mit einer Mindestbreite von 40 cm ausgelegt.

Jede Lichtschranke wertet den Einfallswinkel des reflektierten Strahles aus und ist damit weitestgehend unempfindlich gegen Fremdlicht und stark unterschiedlich reflektierende Gegenstände. Das direkte Einstrahlen von Fremdlicht wird durch Blenden in den Gehäuseöffnungen für die Lichtschranken vermieden. Die Gehäuseöffnungen weisen Schutzscheiben auf, durch die die Lichtschranken gegen Verschmutzung geschützt sind.

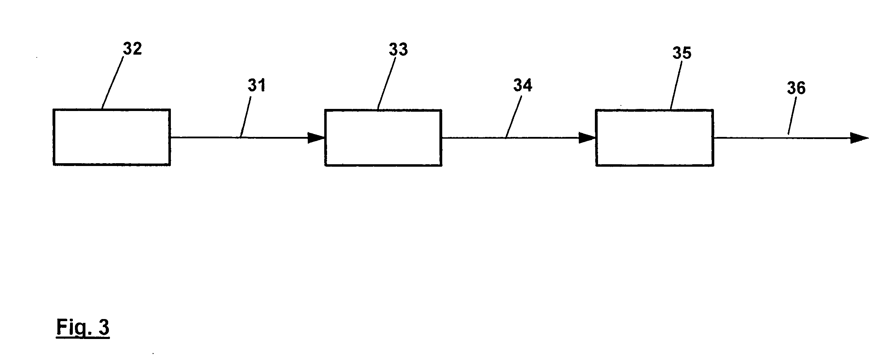

Figur 3 zeigt das Blockschaltbild eines Sensor-Moduls, wobei jeweils zwei als Lichtschranken-Module ausgebildete Sensor-Module in einem Gehäuse angeordnet sind.

Das analoge Ausgangssignal 31 einer Reflektions-Lichtschranke 32 wird einer Auswerteelektronik 33 zugeführt, in der es in ein Digitalsignal 34 umgewandelt wird. Das Digitalsignal 34 wird einer Impulscodierung 34 zugeführt, in der es auf eine Nennspannung verstärkt und als Rechtecksignal 36 an das Management-Modul übertragen wird. Das Management-Modul erkennt an der Pulsform den angeschlossenen Sensortyp und den logischen Zustand belegt/nicht belegt.

**Bezugzeichenliste**
- 1: Ast
- 2: Doppel-Lichtschranken-Modul
- 3: Doppel-Lichtschranken-Modul
- 4: Datenleitung
- 5: Management-Modul
- 6: Stellplatz
- 7: Stellplatz
- 8: Stellplatz
- 9: Stellplatz
- 10: Durchlaufkanal
- 11: Durchlaufkanal
- 12: Buchse
- 13: Sensorankopplung
- 14: Controller
- 15: Busleitung
- 16: Steuer- und Auswertevorrichtung
- 17: Busankoppler
- 18: Bus-Steuereinheit
- 19: Abfrage- und Auswerteeinheit
- 20: Eingang
- 21: Sensor-Modul
- 22: Sensor-Modul
- 23: Sensor-Modul
- 24: Sensor-Modul
- 25: Pol
- 26: Pol
- 27: Pol
- 28: Pol
- 29: Pol
- 30: Pol
- 31: Ausgangssignal
- 32: Reflexions-Lichtschranke
- 33: Auswerteelektronik
- 34: Digitalsignal
- 35: Impulscodierung
- 36: Rechtecksignal

## Patentansprüche

1. Stellplatzüberwachungssystem mit einer Steuer- und Auswertevorrichtung (16), die mit mindestens einer Busleitung (15) verbunden ist, mindestens einem Management-Modul (5), das an die mindestens eine Busleitung (15) angeschlossen ist, und mindestens einer Sequenz hintereinandergeschalteter Sensor-Module (21, 22, 23, 24), die an das mindestens eine Management-Modul (5) angeschlossen ist, wobei mit jedem Sensor-Modul (21, 22, 23, 24) die Belegung oder Nicht-Belegung mindestens eines zugeordneten Stellplatzes (6, 7, 8, 9) detektierbar und der logische Belegungszustand an das jeweilige Management-Modul (5) weiterleitbar ist, und mit jedem Management-Modul (5) die mindestens eine daran angeschlossene Sequenz von Sensor-Modulen (21, 22, 23, 24) mit Spannung versorgbar und die Belegungszustände der Sensor-Module (21, 22, 23, 24) abfragbar und speicherbar sind sowie über die Busleitung (15) an die Steuer- und Auswertevorrichtung (16) übertragbar sind.

2. Stellplatzüberwachungssystem nach Anspruch 1, **dadurch gekennzeichnet, dass** mit jedem Management-Modul (5) die Belegungszustände der Sensor-Module (21, 22, 23, 24) in regelmäßigen Abständen abfragbar sind, wobei die neu erfassten Daten mit den bisher gespeicherten Daten vergleichbar und im Falle von Änderungen nach einem Abfragezyklus gesammelt an die Steuer- und Auswertevorrichtung (16) übertragbar sind.

3. Stellplatzüberwachungssystem nach Anspruch 1 oder 2, **d adurch gekennzeichnet, dass** die aktuellen Daten der an ein Management-Modul (5) angeschlossenen Sensor-Module (21, 22, 23, 24) direkt durch die Steuer- und Auswertevorrichtung (16) abfragbar und an diese weiterleitbar sind.

4. Stellplatzüberwachungssystem nach einem der Ansprüche 1 bis 3, **dadurch gekennzeichnet, dass** die Sensor-Module (21, 22, 23, 24) Reflektions-Lichtschranken (32) aufweisen.

5. Stellplatzüberwachungssystem nach Anspruch 4, **dadurch gekennzeichnet, dass** die Sensor-Module (21, 22, 23, 24) derart ausgebildet sind, dass das analoge Ausgangssignal (31) einer Lichtschranke (32) einer Auswerteelektronik (33) zuführbar ist, in der es in ein Digitalsignal (34) umwandelbar ist, das Digitalsignal (34) einer Impulscodierung (35) zuführbar ist, in der es auf eine Nennspannung verstärkt wird und als Rechtecksignal (36) an das zugeordnete Management-Modul (5) weiterleitbar ist.

6. Stellplatzüberwachungssystem nach Anspruch 4 oder 5,
**dadurch gekennzeichnet, dass** jeweils zwei Sensor-Module (21, 22, 23, 24) als ein Doppel-Lichtschranken-Modul (2, 3) ausgebildet sind.

7. Stellplatzüberwachungssystem nach Anspruch 6, **dadurch gekennzeichnet, dass** die beiden Sensor-Module in einem gemeinsamen Gehäuse derart angeordnet sind, dass die beiden Reflektions-Lichtschranken (32) in voneinander wegweisenden Richtungen orientiert sind, und für die Reflektions-Lichtschranken (32) Öffnungen im Gehäuse vorgesehen sind.

8. Stellplatzüberwachungssystem nach Anspruch 7, **dadurch gekennzeichnet, dass** die Öffnungen jeweils eine Schutzscheibe aufweisen.

9. Stellplatzüberwachungssystem nach Anspruch 7 oder 8, **dadurch gekennzeichnet, dass** die Öffnungen Blenden aufweisen.

10. Stellplatzüberwachungssystem nach einem der Ansprüche 1 bis 9, **dadurch gekennzeichnet, dass** die mindestens eine Sequenz bis zu vier Sensor-Module (21, 22, 23, 24) umfasst.

11. Stellplatzüberwachungssystem nach einem der Ansprüche 1 bis 10, **dadurch gekennzeichnet, dass** an das mindestens eine Management-Modul (5) bis zu vier Sequenzen von Sensor-Modulen angeschlossen sind.

12. Stellplatzüberwachungssystem nach einem der Ansprüche 1 bis 11, **dadurch gekennzeichnet, dass** bis zu 64 Management-Module an die mindestens eine Busleitung (15) angeschlossen sind.

13. Stellplatzüberwachungssystem nach einem der Ansprüche 1 bis 12, **dadurch gekennzeichnet, dass** mit der Steuer- und Auswertevorrichtung (16) bis zu 16 Busleitungen (15) mit daran angeschlossenen Management-Modulen und daran angeschlossenen Sequenzen von Sensor-Modulen verbunden sind.

14. Anordnung von Durchlaufkanälen (10, 11) einer Kommissionieranlage mit einem Stellplatzüberwachungssystem nach einem der Ansprüche 1 bis 13, wobei mehrere Durchlaufkanäle (10, 11) horizontal nebeneinander und/oder vertikal übereinander angeordnet sind, jeder Durchlaufkanal (10, 11) in Längsabschnitten mehrere Stellplätze (6, 7 bzw. 8, 9) für Warenbehälter aufweist und jeder Durchlaufkanal (10, 11) einer Sequenz von Sensor-Modulen zugeordnet ist, wobei die Sensor-Module seitlich neben einigen der Stellplätze (6, 7, 8, 9) angeordnet sind.

15. Anordnung nach Anspruch 14, **dadurch gekennzeichnet, dass** jeweils zwischen zwei nebeneinanderliegenden Stellplätzen (7, 9 bzw. 6, 8) zweier horizontal unmittelbar benachbarter Durchlaufkanäle (10, 11) Doppel-Lichtschranken-Module (2 bzw. 3) angeordnet sind, die an ein Management-Modul (5) angeschlossen sind.

16. Anordnung nach Anspruch 15, **dadurch gekennzeichnet, dass** zwischen den (von der Entnahmeposition der Durchlaufkanäle (10, 11) aus gesehen) jeweils letzten Stellplätzen (6, 7 bzw. 8, 9) der unmittelbar benachbarten Durchlaufkanäle (10, 11) Doppel-Lichtschranken-Module (2 bzw. 3) angeordnet sind.

17. Anordnung nach Anspruch 15 oder 16, wobei die Durchlaufkanäle (10, 11) seitliche Führungsschienen aufweisen, **dadurch gekennzeichnet, dass** die Doppel-Lichtschranken-Module (2, 3) ein Gehäuse aufweisen, das durch Halterungen an den Führungsschienen jeweils zweier horizontal benachbarter Durchlaufkanäle (10, 11) befestigbar sind, wobei die Öffnungen für die zu den beiden Seiten weisenden Reflektions-Lichtschranken (32) im Gehäuse oberhalb der Führungsschienen angeordnet sind.
